# EUROPÄISCHE PATENTSCHRIFT

(11) **EP 4 041 830 B1**
(45) Veröffentlichungstag und Bekanntmachung des Hinweises auf die Patenterteilung: **06.12.2023**
(21) Anmeldenummer: 20781539.0
(22) Anmeldetag: 01.10.2020
(51) Int. Cl.: C09D 4/06, C09D 4/00, C09D 175/04, C09D 175/16

(54) **THERMISCH HÄRTBARE ZWEIKOMPONENTIGE BESCHICHTUNGSMASSEN**
THERMALLY CURABLE TWO-COMPONENT COATING COMPOUNDS
COMPOSÉS DE REVÊTEMENT À DEUX COMPOSANTS DURCISSABLES THERMIQUEMENT

(30) Priorität: 08.10.2019 EP 19201855
(43) Veröffentlichungstag der Anmeldung: 17.08.2022
(73) Patentinhaber: BASF SE, 67056 Ludwigshafen (DE)
(72) Erfinder: ROSCHMANN, Konrad, 67056 Ludwigshafen (DE); PAULUS, Wolfgang, 67056 Ludwigshafen (DE); LUCAS, Frederic, 67056 Ludwigshafen (DE); NEUMANN, Susanne, 67056 Ludwigshafen (DE); WOERNER, Alexander, Constantin Felix, 89520 Heidenheim (DE)
(74) Vertreter: BASF IP Association
(86) Internationale Anmeldenummer: PCT/EP2020/077499
(87) Internationale Veröffentlichungsnummer: WO 2021/069295

(56) Entgegenhaltungen:
- WO-A1-2013/139602
- WO-A1-2017/157711
- US-A1- 2008 103 281
- WENJING XIA ET AL: "Preparation and Characterization of Fluorinated Hydrophobic UV-Crosslinkable Thiol-Ene Polyurethane Coatings", COATINGS, Bd. 7, Nr. 8, 6. August 2017 (2017-08-06), Seite 117, XP055762083, CH ISSN: 2079-6412, DOI: 10.3390/coatings7080117

## Beschreibung

Die Erfindung betrifft wasserbasierte, thermisch härtbare zweikomponentige Beschichtungsmassen mit Mercaptogruppen, Verfahren zu deren Herstellung und deren Verwendung.

Aus US 6,551,710 B1 ist bekannt, strahlungshärtbare, C=C-funktionelle Harze (u.a. auch Acrylate) mit Thiogruppen enthaltenden Verbindungen reagieren zu lassen. Nachteilig an diesen Systemen ist, dass die Beschichtungsmassen aus Lösungsmitteln aufgetragen werden und somit einen hohen Gehalt an klimaschädlichen, flüchtigen organischen Verbindungen (= VOCs) aufweisen.

A.K. O'Brian, N.B. Cramer, C.N. Bowman, beschreiben in "Oxygen inhibition in Thiol-Acrylate Photopolymerizations", J. Polym. Sci., Part A: Polymer Chemistry 44: 2007-2014 (2006) den Einfluss der Anwesenheit von Sauerstoff (O₂) auf die Copolymerisation von Acrylaten mit Thiolen in Substanz. Höherfunktionelle Thiole führen bei gleicher Konzentration an Thiolfunktionalitäten zu einer schnelleren Polymerisation, was deren Stabilisierung noch schwieriger macht.

Durch Verwendung wasserdispergierbarer Harze als umweltfreudlicher Alternative können lösemittelbasierte Beschichtungsmassen substituiert werden. Dies wurde wie von D.B. Otts, E. Heidenreich und M.W. Urban in "Novel waterborne UV-crosslinkable thiol-ene polyurethane dispersions", Polymer 46: 8162-8168 (2005) sowie von V. Mishra, J. Desai und K.I. Patel in "High-performance waterborne UV-curable polyurethane dispersion based on thiol-acrlyate/ thiol-epoxy hybrid networks", J. Coat. Technol. Res. 14 (5): 1069-1081 (2017) beschrieben und bereits auch für C=C-funktionelle und/oder Epoxy-funktionelle Polyurethandispersionen in Kombination mit höherfunktionellen Thiolen realisiert.

Die Zugabe der hydrophoben Thiol-Komponente erfolgte allerdings in Substanz, sodass nicht ausgeschlossen werden kann, dass erhebliche Anteile desselben in die Polyurethan-Partikel eindiffundieren und dort eine vorzeitige Reaktion mit den dort befindlichen co-reaktiven Gruppen eingehen (= Vor-Aushärtung), was die praktische Anwendbarkeit aufgrund zu kurzer Topfzeiten empfindlich einschränken würden.

Selbiges gilt sinngemäß auch für US 2003/0165701, in der wässrige Beschichtungszusammensetzungen, welche einen Michael-Akzeptor - namentlich Methylenmalonate - und Polythiol als Michael-Donor enthalten, beschrieben werden. Die Zugabe der hydrophoben Thiol-Komponente erfolgt dabei in den Ausführungsbeispielen entweder wie vorab beschrieben in Substanz oder als mit externem Emulgator stabilisierte o/w-Emulsion (ohne Angabe von Details). Die Wahl geeigneter Emulgatoren ist allerdings diffizil, sodass in den meisten Fällen mit instabilen, phasenseparierenden o/w-Emulsionen zu rechnen ist; damit läuft man in der Praxis in dieselbe Problematik wie bei der Thiol-Zugabe in Substanz.

Die in US 2003/0165701 ebenfalls beschriebenen, wasserlöslichen Polythiole auf Basis ethoxylierter Polyalkohole führen, wie in WO 2013/139602 ausgeführt, zu instabilen Abmischungen mit unzureichender Topfzeit, welche bereits nach wenigen Stunden gelieren. Dem gegenüber lehrt WO 2013/139602 die Verwendung SH-funktioneller Polyurethandispersionen: Diese liegen in der wässrigen Formulierung durch Wasser als kontinuierliche Phase räumlich getrennt von den co-reaktiven Urethanacrylat-Partikeln vor; die Vernetzungsreaktion kann dadurch erst bei bzw. nach Filmbildung erfolgen. Nachteilig aus anwendungstechnischer Sicht ist allerdings, dass derartige Beschichtungen relativ hart sind und eine gewisse Flexibilität / Elastizität vermissen lassen.

WO 2013/139602 offenbart eine wäßrige Dispersionen enthaltend mindestens ein wasserdispergierbares strahlungshärtbares Polyurethan (A), sowie mindestens eine wasserdispergierbare Verbindung (B), die mindestens zwei Mercaptogruppen aufweist.

WENJING XIA ET AL: "Preparation and Characterization of Fluorinated Hydrophobie UV-Crosslinkable Thiol-Ene Polyurethane Coatings",COATINGS, Bd. 7, Nr. 8, 6. August 2017 (2017-08-06), Seite 117 offenbart eine UV-härtbare Beschichtungszusammensetzung, umfassend ein Polyurethan-Präpolymer, das mit einer Doppelbindung terminiert ist und mit Isophorondiisocyanat (IPDI), Hydroxyl-terminiertem Polybutadien (HTPB), 1,4-Butandiol (BDO) und 2-Hydroxyethylacrylat (HEA) synthetisiert ist. die Zusammensetzung enthält ferner ein Fluoracrylatmonomer und einen multifunktionellen Thiolvernetzer.

Aufgabe der vorliegenden Erfindung war es, wasserbasierte zweikomponentige Beschichtungsmassen zur Verfügung zu stellen, die thermisch durch Reaktion der enthaltenen Mercaptogruppen härtbar sind und eine ausreichend lange Topfzeit aufweisen. Die mit diesen Formulierungen erhaltenen Beschichtungen sollen eine moderate Härte bei gleichzeitig guter Flexibilität und eine hohe Chemikalienbeständigkeit (= Vernetzungsdichte) aufweisen.

Die Aufgabe wurde gelöst durch eine zweikomponentige Beschichtungsmasse enthaltend mindestens eine wasserdispergierbare Polymermischung (A) welche mindestens eine gegenüber Mercapto reaktive Gruppe ausgewählt aus der Gruppe Epoxid und Michael-Akzeptor aufweist,
sowie
mindestens ein wasseremulgierbares Thiol (B) enthaltend als Aufbaukomponenten,
(Ba) mindestens eine Verbindung die mindestens zwei Mercaptogruppen aufweist,
(Bb) mindestens eine Verbindung, die mindestens eine gegenüber Mercapto reaktive ungesättigte Gruppe und mindestens eine dispergieraktive Gruppe aufweist
wobei die Aufbaukomponente (Ba) einen Hansch Parameter von mindestens 2,0 aufweist. Wasserdispergierbare Polymermischung (A)

Die wasserdispergierbare Polymermischung (A) enthält mindestens ein wasserdispergierbares Polymer (A1).

Wasserdispergierbare Polymere (A1) weisen in der Regel zahlenmittlere Molekulargewichte im Bereich > 500 und ≤ 500000 g/mol, vorteilhaft ≥ 600 und ≤ 10000 g/mol und insbesondere vorteilhaft ≥ 750 und ≤ 3000 g/mol auf. Dabei soll im Rahmen der vorliegenden Erfindung das zahlenmittlere Molekulargewicht durch Gelpermeationschromatographie unter Verwendung definierter Polystyrolstandards erfolgen.

Wasserdispergierbare Polymere (A1) kommen im Rahmen der vorliegenden Erfindung alle natürlich vorkommenden oder synthetisch hergestellten Polymerisate in Betracht, welche mindestens eine Glyzidyl, Maleimid, Fumarat, Maleat, Acrylat, Itaconat, Acrylamid, Methylenmalonat, Crotonat, Cinnamat, Methacrylamid und/oder Methacrylat Gruppe aufweisen.

Beispielhaft für wasserdispergierbare Polymere (A1) auf Basis von Naturstoffen seien entsprechend funktionalisierte(s) (Ur-)Alkydharze, Fettsäure-basierte Polyurethane, alkoxyliertes Glyzerin und Epoxidharze oder Epoxyacrylate auf Basis von natürlichem Glyzerin genannt.

Bei den synthetisch hergestellten wasserdispergierbaren Polymeren (A1) seien beispielhaft entsprechend funktionalisierte Polykondensationsprodukte, wie beispielsweise Alkydharze, Polyester, Polyether, Polycarbonate, Polyamide, Silikonharze und/oder Epoxyharze sowie Polyadditionsprodukte, wie beispielsweise Polyurethane sowie Polymerisate, welche aus ethylenisch ungesättigten Verbindungen in einpolymerisierter Form aufgebaut sind, genannt.

Bevorzugte wasserdispergierbare Polymere (A1) sind Polyurethan-Acrylate, Polyester-Acrylate, Polyether-Acrylate, Epoxy-Acrylate, multi-funktionelle Acrylat-Polymere und Glyzidyletherfunktionelle Epoxidharze.

Epoxidharze sind beispielsweise beschrieben in H.Q. Pham, M.J. Marks "Epoxy Resins", DOI: 10.1002/14356007.a09_547.pub2 in "Ullmann's Encyclopedia of Industrial Chemistry - 7th ed.", Whurr Publishers, in Z.W. Wicks, F.N. Jones, S.P. Pappas "Organic Coatings: Science and Technology", Vol. I, Kapitel XI "Epoxy and Phenolic Resins", John Wiley & Sons und in G. Bianchini, R. Dyer, A. Fream, P. Heffer, S.P. McOwan, P. Oldring, I. Royston, N. Tuck, "Waterborne & Solvent Based Epoxies and their End User Applications" in "Waterborne & Solvent Based Surface Coatings Resins and Their Applications", Vol. II, SITA Technology.

Die Herstellung dieser Polykondensationsverbindungen bzw. Polyadditionsverbindungen erfolgt durch dem Fachmann geläufige Herstellverfahren.

Auch die Herstellung der wasserdispergierbaren Polymeren (A1) erfolgt vorteilhaft aus den entsprechenden polymeren Vorstufen, welche mindestens eine Glyzidyl, Maleimid, Fumarat, Maleat, Acrylat, Itaconat, Acrylamid, Methylenmalonat, Crotonat, Cinnamat, Methacrylamid und/oder Methacrylat Gruppe aufweisen, bevorzugt mindestens eine Acrylat und/oder Methacrylatgruppe.

Die Herstellung der wasserdispergierbaren Polymere (A1) kann unter Reaktionsbedingungen in Substanz oder vorteilhaft in Anwesenheit eines dem Fachmann geläufigen inerten organischen Lösungsmittels erfolgen. Beispiele für solche eingesetzten organischen Lösungsmittel sind polare, aprotische organische Lösungsmittel wie beispielsweise N-Methylpyrrolidon (NMP), N-Ethylpyrrolidon (NEP) oder Dipropylenglykol-Dimethylether (Proglyde^{®} DMM), bevorzugt allerdings solche mit einem Siedepunkt im Bereich ≥ 40 und ≤ 170 °C und vorteilhaft im Bereich ≥ 60 und ≤ 130 °C, bei Atmosphärendruck (1,013 bar absolut), wie insbesondere Ketone, wie Aceton, Methylethylketon, Methylisobutylketon, Methyl-tert.-butylketon und/oder Alkansäurenalkylester, wie Ethylacetat, n-Proplyacetat, Isopropylacetat, n-Butylacetat, tert.-Butlyacetat, Methylpropionat oder Ethylpropionat.

In einer vorteilhaften Ausführungsform wird das organische Lösungsmittel nach der Herstellung der wasserdispergierbaren Polymere (A1) in einer dem Fachmann geläufigen Art durch Wasser ersetzt (Zugabe von Wasser und Abdestillieren des organischen Lösungsmittels), wobei eine wässrige Dispersion des wenigsten einen wasserdispergierbaren Polymers (A1) gebildet wird.

Die wasserdispergierbaren Polymere (A1) müssen nicht zwangsweise hydrophil modifiziert sein, sondern können nach Zugabe grenzflächenaktiver Substanzen (z.B. Emulgatoren) auch durch entsprechenden Energieeintrag oder Phaseninversion oder nach Abmischung durch Co-Dispergierung mit einem wasserdispergierbaren Polymer in einen wasserdispergierten Zustand überführt werden.

Beispielhafte wasserdispergierbaren Polymere (A1) sind z. B. in P.K.T. Oldring, Chemistry & Technology of UV & EB Formulation for Coatings, Inks & Paints, Vol. II: Prepolymers & Reactive Diluents, J. Wiley and Sons, New York und Sita Technology Ltd., London 1997, oder in H. Kittel, Lehrbuch der Lacke und Beschichtungen, Band VII: Verarbeitung von Lacken und Beschichtungsmaterialien, S. 240-245 etc., Verlag W.A. Colomb, Berlin 1979 beschrieben.

Geeignete Polymere (A1) sind aliphatische und aromatische Epoxy-acrylate und Epoxymethacrylate, wobei aliphatische Verbindungen bevorzugt benutzt werden. Diese beinhalten zum Beispiel die Reaktionsprodukte der Acrylsäure oder Methacrylsäure mit aliphatischen Glycidylethern.

Weiterhin geeignete Verbindungen sind Polyether-acrylate und -methacrylate, Polyesteracrylate und -methacrylate und Polyurethan-acrylate und -methacrylate. Darunter werden Reaktionsprodukte der Acrylsäure oder Methacrylsäure mit den Polyesterolen und Polyetherolen bevorzugt, die als Polykondensate beschrieben wurden. Polyetherole, die in diesem Zusammenhang benutzt werden, sind vorzugsweise alkoxylierte, besonders ethoxylierte und/oder propoxylierte, mono-, di-, tri- oder polyfunktionale Alkohole.

Vorteilhaft handelt es sich bei dem wasserdispergierbaren Polymer (A1) um ein Polyurethan enthaltend als Aufbaukomponenten
- (Aa): mindestens ein organisches aliphatisches, aromatisches oder cycloaliphatisches Di- oder Polyisocyanat
- (Ab): mindestens eine Verbindung mit mindestens einer gegenüber Isocyanat reaktiven Gruppe und mindestens einer Maleimid, Fumarat, Maleat, Acrylat, Acrylamid, Acrylonitril, Crotonat, Cinnamat, Methacrylamid und/oder Methacrylat Gruppe,
- (Ac): optional mindestens eine Verbindung mit mindestens zwei gegenüber Isocyanat reaktiven Gruppen,
- (Ae): optional mindestens eine Verbindung mit genau einer gegenüber Isocyanat reaktiven Gruppe,
- (Ag): mindestens eine Verbindung, die mindestens eine gegenüber Isocyanat reaktive Gruppe und mindestens eine dispergieraktive Gruppe aufweist.

Die bei der Herstellung der erfindungsgemäßen Polyurethane erhaltenen Reaktionsgemische weisen in der Regel ein zahlenmittleres Molgewicht Mₙ von weniger als 10000 g/mol, bevorzugt von weniger als 5000 g/mol, besonders bevorzugt von weniger als 4000 und ganz besonders bevorzugt von weniger als 2000 g/mol (bestimmt durch Gelpermeationschromatographie mit Tetrahydrofuran und Polystyrol als Standard).

Bei der Komponente (Aa) kann es sich um Monomere oder Oligomere von aliphatischen oder cycloaliphatischen Diisocyanaten handeln.

Die NCO Funktionalität solcher Verbindung beträgt in der Regel mindestens 1,8 und kann bis zu 8 betragen, bevorzugt 1,8 bis 5 und besonders bevorzugt 2 bis 4.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische.

Es können auch Gemische der genannten Diisocyanate vorliegen.

Besonders bevorzugt sind Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und Hexamethylendiisocyanat, insbesondere bevorzugt ist Hexamethylendiisocyanat.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclischen Verbindungen.

Es kommen auch höhere Isocyanate mit im Mittel mehr als 2 Isocyanatgruppen in betracht. Dafür eignen sich beispielsweise Triisocyanate wie Triisocyanatononan oder 2,4,6-Triisocyanatotoluol.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate, Carbodiimid, hyperverzweigte Polyisocyanate, Polyurethan-Polyisocyanate-Präpolymere oder Polyharnstoff-Polyisocyanat-Präpolymere von geradlinigen oder verzweigten C₄-C₂₀-Alkylendiisocyanaten, cycloaliphatischen Diisocyanaten mit insgesamt 6 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische, im Rahmen dieser Schrift als (cyclo)aliphatisch zusammengefaßt, Di- und Polyisocyanate, z.B. die vorstehend genannten aliphatischen bzw. cycloaliphatischen Diisocyanate, oder deren Mischungen.

Für die vorliegende Erfindung können sowohl solche Di- und Polyisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Di- oder Polyisocyanate weisen in der Regel einen sehr geringen oder sogar nicht meßbaren Anteil an chlorierten Verbindungen auf, was zu günstigen Farbzahlen der Produkte führt.

In einer Ausführungsform der vorliegenden Erfindung weisen die Di- und Polyisocyanate (Aa) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch Di- und Polyisocyanate (Aa) mit einem höheren Chlorgehalt eingesetzt werden.

Die Di- und Polyisocyanate (Aa) können auch zumindest teilweise in blockierter Form vorliegen. Weiterhin bevorzugt sind
1) Isocyanuratgruppen aufweisende Polyisocyanate von aliphatischen und/oder cycloaliphatischen Diisocyanaten. Besonders bevorzugt sind hierbei die entsprechenden aliphatischen und/oder cycloaliphatischen Isocyanato-Isocyan-urate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiondiisocyanate mit aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können als alleinige Komponente oder im Gemisch mit anderen Polyisocyanaten, insbesondere den unter 1) genannten, eingesetzt werden.
3) Biuretgruppen aufweisende Polyisocyanate mit cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, iso-Propanol, n-Propanol, n-Butanol, *iso-*Butanol, sek-Butanol, *tert-*Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butan-diol, 1,6-Hexandiol, 1,3-Propandiol, 2-Ethyl-1,3-Propandiol, 2-Methyl-1,3-Propan-diol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,4-Butan-diol, 3-Methylpentan-1,5-diol, 2-Ethylhexan-1,3-diol, 2,4-Diethyloctan-1,3-diol, Hydroxy-pivalinsäureneopentylglykolester, Ditrimethylolpropan, Dipentaerythrit, 2,2-Bis(4-hydro-xycyclohexyl)propan, 1,1-, 1,2-, 1,3- und 1,4-Cyclohexan-dimethanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-polyisocyanat-Präpolymere, aus Di- und/oder Polyisocyanaten mit Alkoholen.
11) Polyharnstoff-Polyisocyanat-Präpolymere.

Die Polyisocyanate 1) bis 11) können im Gemisch, optional auch im Gemisch mit Diisocyanaten, eingesetzt werden.

In einer bevorzugten Ausführungsform der vorliegenden Erfindung handelt es sich bei der Komponente (Aa) um ein Polyisocyanat und ist ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten.

Der Anteil an anderen sich aus Isocyanatgruppen bildenden Gruppen, besonders Isocyanurat-, Biuret-, Uretdion-, Iminooxadiazintrion- und/oder Carbodiimidgruppen spielt erfindungsgemäß eine untergeordnete Rolle.

In einer weiteren bevorzugten Ausführungsform handelt es sich bei der Komponente (Aa) um Isocyanuratgruppen aufweisende Polyisocyanate. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.

In einer bevorzugten Ausführungsform der Erfindung weisen die erfindungsgemäßen Polyurethane praktisch keine freien Isocyanatgruppen mehr auf, d.h. der Gehalt an freien Isocyanat-gruppen beträgt weniger als 0,5 Gew%, bevorzugt weniger als 0,3, besonders bevorzugt weniger als 0,2, ganz besonders bevorzugt weniger als 0,1, insbesondere weniger als 0,05 und speziell 0 Gew%.

Herstellbedingt können Polyisocyanate (Aa) noch einen geringen Anteil von dem ihnen zugrundeliegenden monomerem Diisocyanat aufweisen, beispielsweise bis zu 5 Gew%, besonders bevorzugt bis zu 3 Gew%, ganz besonders bevorzugt bis zu 2, insbesondere bis zu 1, speziell bis zu 0,5 und sogar bis zu 0,25 Gew%.

Als Komponente (Ab) kommen erfindungsgemäß Verbindungen in Betracht, die mindestens eine gegenüber Isocyanat reaktive Gruppe und mindestens eine Maleimid, Fumarat, Maleat, Acrylat, Acrylamid, Acrylonitril, Crotonat, Cinnamat, Methacrylamid und/oder Methacrylat Gruppe tragen, bevorzugt mindestens eine Acrylat und/oder Methacrylatgruppe.

In einer bevorzugten Ausführungsform der Erfindung handelt es sich bei der Verbindung (Ab) um Verbindungen mit einer oder zwei, besonders bevorzugt genau einer gegenüber Isocyanat reaktiven Gruppe. Die Anzahl der Maleimid, Fumarat, Maleat, Acrylat, Acrylamid, Acrylonitril, Crotonat, Cinnamat, Methacrylamid und/oder Methacrylat Gruppe beträgt mindestens eins, bevorzugt eins bis fünf, besonders bevorzugt eins bis vier und ganz besonders bevorzugt eins bis drei Maleimid, Fumarat, Maleat, Acrylat, Acrylamid, Acrylonitril, Crotonat, Cinnamat, Methacrylamid und/oder Methacrylat Gruppen, insbesondere bevorzugt eins bis drei Acrylat und/oder Methacrylatgruppen

Bevorzugt weisen die Komponenten (Ab) ein Molgewicht unter 10000 g/mol auf, besonders bevorzugt unter 5000 g/mol, ganz besonders bevorzugt unter 4000 g/mol und insbesondere unter 3000 g/mol. Spezielle Verbindungen (Ab) weisen ein Molgewicht unter 1000 oder sogar unter 600 g/mol auf.

Gegenüber Isocyanat reaktive Gruppen können z.B. sein -OH, -SH, -NH₂ und -NHR⁵, wobei R⁵ Wasserstoff oder eine 1 bis 4 Kohlenstoffatome enthaltende Alkylgruppe, wie z.B. Methyl, Ethyl, n-Propyl, iso-Propyl, n-Butyl, *iso-Butyl,* sek-Butyl oder *tert*-Butyl, bedeutet.

Gegenüber Isocyanat reaktive Gruppen können bevorzugt sein -OH, -NH₂ oder -NHR⁵, besonders bevorzugt -OH oder-NH₂ und ganz besonders bevorzugt -OH.

Komponenten (Ab) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure oder Vinylether mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, 2,2-Bis(4-hydroxycyclo-hexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Methylamino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Weiterhin sind auch ungesättigte Polyether- oder Polyesterole oder Polyacrylatpolyole mit einer mittleren OH-Funktionalität von 2 bis 10 geeignet, wenn auch weniger bevorzugt.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl(meth)-acrylat, 1,4-Butandiolmono(meth)acrylat, Neopentylglykolmono(meth)acrylat, 1,5-Pentandiolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Amino-propyl(meth)acrylat, 4-Aminobutyl(meth)acrylat, 6-Aminohexyl(meth)acrylat, 2-Thioethyl(meth)-acrylat, 2-Aminoethyl(meth)acrylamid, 2-Aminopropyl(meth)acrylamid, 3-Aminopropyl(meth)-acrylamid, 2-Hydroxyethyl(meth)acrylamid, 2-Hydroxypropyl(meth)acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropyl(meth)acrylat sowie die Monoacrylate von Polyethylenglykol der Molmasse von 106 bis 238.

Als Komponente (Ac) kommen Verbindungen in Betracht, die mindestens zwei, bevorzugt genau zwei gegenüber Isocyanat reaktive Gruppen, beispielsweise -OH, -SH, -NH₂ oder-NHR⁵, worin R⁵ darin unabhängig voneinander Wasserstoff, Methyl, Ethyl, iso-Propyl, n-Propyl, n-Butyl, *iso-*Butyl, sek-Butyl oder *tert-*Butyl bedeuten kann, aufweisen.

Gegenüber Isocyanat reaktive Gruppen können bevorzugt sein -OH, -NH₂ oder -NHR⁵, besonders bevorzugt -OH oder-NH₂ und ganz besonders bevorzugt -OH.

Dies sind bevorzugt 2 bis 20 Kohlenstoffatome aufweisende Diole, z.B. Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Poly-THF mit einer Molmasse zwischen 162 und 2000, Poly-1,2-propandiol oder Poly-1,3-propandiol mit einer Molmasse zwischen 134 und 1178 oder Polyethylenglykol mit einer Molmasse zwischen 106 und 2000 sowie aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Monopropanolamin etc. oder Thioalkohole, wie Thioethylenglykol.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und optional, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1 ,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die optional wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Besonders geeignet sind hier die cycloaliphatischen Diole, wie z.B. Bis-(4-hydroxycyclohexan) isopropyliden, Tetramethylcyclobutandiol, 1,2-, 1,3- oder 1,4-Cyclohexandiol, 1,1-, 1,2-, 1,3- und 1,4-Cyclohexandimethanol, Cyclooctandiol oder Norbornandiol.

Verbindungen (Ac) mit mehr als zwei gegenüber isocyanat reaktiven Gruppen können bevorzugt 2 bis 20 Kohlenstoffatome aufweisende Polyole sein, beispielsweise Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, besonders bevorzugt sind Trimethylolpropan, Pentaerythrit und Glycerin und ganz besonders bevorzugt Trimethylolpropan.

Optionale Komponenten (Ae) sind solche mit optional mindestens einer Verbindung mit genau einer gegenüber Isocyanat reaktiven Gruppe.

Dabei handelt es sich bevorzugt um Monoole, besonders bevorzugt um Alkanole und ganz besonders bevorzugt um Alkanole mit 1 bis 20, bevorzugt 1 bis 12, besonders bevorzugt 1 bis 6, ganz besonders bevorzugt 1 bis 4 und insbesondere 1 bis 2 Kohlenstoffatome.

Beispiele dafür sind Methanol, Ethanol, iso-Propanol, n-Propanol, n-Butanol, iso-Butanol, *sek-*Butanol, *tert-*Butanol, n-Hexanol, n-Heptanol, n-Octanol, n-Decanol, n-Dodecanol (Laurylalkohol), 2-Ethylhexanol, Cyclopentanol, Cyclohexanol, Cyclooctanol, Cyclododecanol, Ethylenglykolmonomethylether, Ethylenglykolmonoethylether, Diethylenglykol, 1,3-Propandiolmonomethylether, bevorzugt sind Methanol, Ethanol, *iso-*Propanol*,* n-Propanol, n-Butanol, *tert-*Butanol, n-Hexanol, 2-Ethylhexanol, Cyclopentanol, Cyclohexanol, und Cyclododecanol, besonders bevorzugt sind Methanol, Ethanol, *iso*-Propanol, n-Propanol, n-Butanol und *tert-*Butanol, ganz besonders bevorzugt sind Methanol und Ethanol und insbesondere Methanol.

In einer bevorzugten Ausführungsform kann es sich bei den Monoolen um die genannten cycloaliphatischen Alkohole handeln, bevorzugt um Cyclopentanol oder Cyclohexanol, besonders bevorzugt um Cyclohexanol.

In einer weiteren bevorzugten Ausführungsform kann es sich bei den Monoolen um die genannten aliphatischen Alkohole mit 6 bis 20 Kohlenstoffatomen handeln, besonders bevorzugt um solche mit 8 bis 20 Kohlenstoffatomen, ganz besonders bevorzugt um solche mit 10 bis 20 Kohlenstoffatomen.

In einer besonders bevorzugten Ausführungsform handelt es sich bei den Monoolen um die genannten aliphatischen Alkohole handeln, ganz besonders bevorzugt um die mit 1 bis 4 Kohlenstoffatomen, insbesondere Methanol.

(Ag) bei den obligatorischen Verbindungen (Ag) handelt es sich um solche, die mindestens eine gegenüber Isocyanat reaktive Gruppe aufweisen und mindestens eine dispergieraktive Gruppe.

Als Komponente (Ag) bevorzugte Verbindungen weisen mindestens eine, bevorzugt genau eine gegenüber Isocyanat reaktiven Gruppe und genau eine dispergieraktive Gruppe auf.

Bei den dispergieraktiven Gruppen kann es bevorzugt sich um (Ag1) anionische bzw. in eine anionische Gruppe überführbare Gruppen handeln.

Verbindungen (Ag1) enthalten genau eine gegenüber Isocyanatgruppen reaktive Gruppe und mindestens eine anionische oder in eine anionische Gruppe überführbare hydrophile Gruppe. Dabei handelt es sich beispielsweise um solche, wie sie in der EP-A1 703 255, dort besonders von S. 3, Z. 54 bis S. 4, Z. 38, in der DE-A1 197 24 199, dort besonders von S. 3, Z. 4 bis Z. 30, in der DE-A1 40 10 783, dort besonders von Sp. 3, Z. 3 bis Z. 40, in der DE-A1 41 13 160, dort besonders von Sp. 3, Z. 63 bis Sp. 4, Z. 4 und in der EP-A2 548 669, dort besonders von S. 4, Z. 50 bis S. 5, Z. 6 beschrieben sind. Auf diese Schriften wird im Rahmen der vorliegenden Offenbarung hiermit ausdrücklich Bezug genommen.

Bevorzugte Verbindungen (Ag1) sind solche mit der allgemeinen Formel

RG-R³-DG

worin
- RG: mindestens eine gegen Isocyanat reaktive Gruppe bedeutet,
- DG: mindestens eine dispergieraktive Gruppe und
- R³: einen 1 bis 20 Kohlenstoffatome enthaltenden aliphatischen, cycloaliphatischen oder aromatischen Rest.

Beispiele für gegenüber Isocyanat reaktiven Gruppen RG sind -OH, -SH, -NH₂ oder -NHR⁵, worin R⁵ die oben angeführte Bedeutung hat, jedoch von dem dort verwendeten Rest verschieden sein kann, bevorzugt sind -OH, -NH₂ oder -NHR⁵, besonders bevorzugt sind sind -OH oder -NH₂, und ganz besonders bevorzugt ist -OH.

Beispiele für DG sind -COOH, -SO₃H oder -PO₃H sowie deren anionischen Formen, denen ein beliebiges Gegenion assoziiert sein kann, z.B. Li⁺, Na⁺, K⁺, Cs⁺, Mg²⁺, Ca²⁺ oder Ba²⁺. Weiterhin können als Gegenion die von Ammoniak oder Aminen, insbesondere tertiären Aminen, abgeleiteten Ammoniumionen oder quartäre Ammoniumionen, wie z.B. Ammonium, Methylammonium, Dimethylammonium, Trimethylammonium, Ethylammonium, Diethylammonium, Triethylammonium, Tributylammonium, Di-*iso*-Propyl-ethyl-ammonium, Benzyldimethylammonium, Monoethanolammonium, Diethanolammonium, Triethanolammonium, Hydroxyethyl-Dimethylammonium, Hydroxyethyl-Diethylammonium, Monopropanolammonium, Dipropanolammonium, Tripropanolammonium, Piperidinium, Piperazinium, N,N'-Dimethylpiperazinium, Morpholinium, Pyridinium, Tetramethylammonium, Triethylmethylammonium, 2-Hydroxyethyl-Trimethylmmonium, Bis-(2-Hydroxyethyl)-dimethylammonium, Tris-(2-Hydroxyethyl)-methyl-mmonium, als Gegenion assoziiert sein.

R³ ist bevorzugt Methylen, 1,2-Ethylen, 1,2-Propylen, 1,3-Propylen, 1,2-Butylen, 1,4-Butylen, 1,3-Butylen, 1,6-Hexylen, 1,8-Octylen, 1,12-Dodecylen, 1,2-Phenylen, 1,3-Phenylen, 1,4-Phenylen, 1,2-Naphthylen, 1,3-Naphthylen, 1,4-Naphthylen, 1,6-Naphthylen, 1,2-Cyclopentylen, 1,3-Cyclopentylen, 1,2-Cyclohexylen, 1,3-Cyclohexylen oder 1,4-Cyclohexylen.

Bevorzugt handelt es sich bei der Komponente (Ag1) z.B. um Hydroxyessigsäure, Weinsäure, Milchsäure, 3-Hydroxypropionsäure, Hydroxypivalinsäure, Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxybernsteinsäure, Hydroxydecansäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-alkylierte oder N-cycloalkylierte Aminopropan- oder -ethansulfonsäuren, beispielsweise N-Cyclohexylaminoethansulfonsäure oder N-Cyclohexylaminopropansulfon-säure, sowie deren Alkali- Erdalkali- oder Ammoniumsalze und besonders bevorzugt um die genannten Monohydroxycarbon- und -sulfonsäuren sowie Monoaminocarbon- und -sulfonsäuren.

Weiterhin bevorzugte Verbindungen (Ag1) sind solche mit genau einer dispergieraktiven Gruppe DG und mindestens zwei gegen Isocyanat reaktiven Gruppe RG, wobei auch hier DG -COOH, -SO₃H oder -PO₃H sowie deren anionischen Formen bedeuten, denen ein beliebiges Gegenion assoziiert sein kann, bevorzugt handelt es sich bei DG um -COOH-Gruppen und wobei auch hier die reaktiven Gruppen RG -OH, -SH, -NH₂ oder -NHR⁵ sein können, worin R⁵ die oben angeführte Bedeutung hat, bevorzugt sind -OH, -NH₂ oder-NHR⁵, besonders bevorzugt sind sind -OH oder -NH₂, und ganz besonders bevorzugt ist -OH.

Beispiele dafür sind Dimethylolpropionsäure, Dimethylolbuttersäure, Trimethylolessigsäure, 3,5-Dihydroxybenzoesäure, 2,5-Dihydroxybenzoesäure, 3,4-Dihydroxybenzoesäure, 2,4-Dihydroxybenzoesäure, 2,4-Dihydroxy-3,6-dimethylbenzoesäure, Zuckersäuren, 4-Amino-2-hydroxybenzoesäure, 5-Amino-2-hydroxybenzoesäure, 3,5-Diaminobenzoesäure, 1-Amino-2-hydroxynaphthalin-4-sulfonsäure, 4,5-Dihydroxynaphthalin-2,7-disulfonsäure, 4-Amino-5-hydroxynaphthalin-2,7-disulfonsäure und Gallussäure, bevorzugt sind Dimethylolpropionsäure, Dimethylolbuttersäure und Trimethylolessigsäure, besonders bevorzugt ist Dimethylolpropionsäure.

Zur Herstellung der Dispersion werden die vorgenannten Säuren, falls es sich nicht schon um Salze handelt, teilweise oder vollständig neutralisiert, bevorzugt mit Alkalisalzen oder Aminen, bevorzugt tertiären Aminen.

Um eine gute Dispergieraktivität zu erreichen weisen die erfindungsgemäßen Polyurethane bevorzugt eine Dichte der dispergieraktiven anionischen Gruppen tragenden Moleküle von 1 bis 25 mol% bezogen auf eine funktionelle Gruppe und Isocyanatgruppen, bevorzugt mindestens 3 mol% und besonders bevorzugt von 5 bis 15 mol% auf.

Die erfindungsgemäß verwendbaren Polyurethane werden durch Reaktion der Komponenten (Aa), (Ab) und (Ag) sowie optional (Ac) und/oder (Ae) miteinander erhalten.

Dabei ist die molare Zusammensetzung (Aa):(Ab): (Ac): (Ae):(Ag) pro 1 mol reaktive Isocycanatgruppen in (Aa) in der Regel wie folgt:

| | |
|---|---|
| (Ab) | 1 - 50, bevorzugt 5 - 40, besonders bevorzugt 10 - 37,5 und insbesondere |
| | 15 - 33 mol% an gegenüber Isocyanat reaktive Gruppen, |
| (Ac) | 0 - 50, bevorzugt 0 - 30, besonders bevorzugt 0 - 25 und insbesondere |
| | 0 - 20 mol% an gegenüber Isocyanat reaktiven Gruppen, |
| (Ae) | 0 - 5, bevorzugt 0 - 4, besonders bevorzugt 0 - 3 und insbesondere |
| | 0 - 2 mol% an gegenüber Isocyanat reaktiven Gruppen, |
| (Ag) | 1 - 25, bevorzugt 2 - 20, besonders bevorzugt 3 - 15 und insbesondere |
| | 5 - 15 mol% an gegenüber Isocyanat reaktive Gruppen, |

mit der Maßgabe, daß die Summe der gegenüber Isocyanat reaktiven Gruppen der Anzahl der Isocyanatgruppen in (Aa) entspricht.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, optional bei erhöhter Temperatur.

Bevorzugt wird dabei die isocyanatgruppenhaltige Verbindung zu der Verbindung, die gegenüber Isocyanatgruppen reaktive Gruppen enthält, zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird die isocyanatgruppenhaltige Verbindung (Aa) vorgelegt und daraufhin (Ab) und/oder (Ag) zugegeben. Nachfolgend können optional gewünschte weitere Komponenten zugegeben werden. Im sogenannten "Präpolymer-Mischverfahren" wird zunächst ein Präpolymer aus den Komponenten (Aa) bis (Ag) hergestellt. Dies kann, falls erforderlich, in einem mit Wasser mischbaren und bei Normaldruck unter 100°C siedenden Lösungsmittel, bevorzugt Aceton, Ethylmethylketon oder Diethylketon, erfolgen, Das Präpolymer wird zuerst in Wasser dispergiert und optional gleichzeitig und/oder anschließend durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden überschüssige Isocyanatgruppen zu Amingruppen hydrolysiert, die mit noch verbliebenen Isocyanatgruppen der Präpolymere unter Kettenverlängerung abreagieren.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird während der Herstellung des Polyurethans unter wasserfreien Bedingungen gearbeitet.

Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%, ganz besonders bevorzugt nicht mehr als 0,75 und insbesondere nicht mehr als 0,5 Gew%.

Bevorzugt wird die Reaktion in Gegenwart mindestens eines sauerstoffhaltigen Gases durchgeführt, z.B. Luft oder Luft-Stickstoff-Gemische oder Gemische aus Sauerstoff oder einem sauerstoffhaltigen Gas mit einem unter den Reaktionsbedingungen inerten Gas, die einen Sauerstoffgehalt unter 15, bevorzugt unter 12, besonders bevorzugt unter 10, ganz besonders bevorzugt unter 8 und insbesondere unter 6 Vol% aufweisen.

Die Reaktion kann auch in Gegenwart eines inerten Solvens durchgeführt werden, z.B. Aceton, Zso-butyl-methylketon, Toluol, Xylol, Butylacetat, Methoxypropylacetat, Methylethylketon oder Ethoxyethylacetat. Bevorzugt wird die Reaktion jedoch in Abwesenheit eines Solvens durchgeführt.

In einer bevorzugten Ausführungsform kann die Umsetzung von (Aa) mit (Ab) unter Allophanatisierungsbedingungen durchgeführt werden.

Typische Katalysatoren für eine derartige Umsetzung sind Zink-organische Verbindungen, wie Zink-Acetylacetonat oder Zink-2-ethylcaproat, oder einer Tetraalkylammonium-Verbindung, wie N,N,N-Trimethyl-N-2-hydroxypropylammonium hydroxid oder wie N,N,N-Trimethyl-N-2-hydroxy-propylammonium 2-ethylhexanoat, oder Zinn-organischen Verbindungen, wie Dibutylzinn dilaurat.

Als Katalysatoren diesen bevorzugt Wismut-, Zink- und/oder Titan-haltige Verbindungen, bevorzugt einer Wismut- und/oder Titan-haltigen Verbindung und besonders bevorzugt einer einer Wismut-haltigen Verbindung.

Als Zink- und Wismutverbindungen kommen dabei solche in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht. Bevorzugt sind dabei die Carboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Salze weisen als Anionen Monocarboxylate der allgemeinen Formel (CₙH₂ₙ₋₁O₂)- auf, wobei n für die Zahlen 1 bis 20 steht. Hierbei sind insbesondere zu erwähnen Format, Acetat, Propionat, Hexanoat, Neodekanoat und 2-Ethylhexanoat.

Unter den Zink-Katalysatoren sind die Zink-carboxylate bevorzugt, besonders bevorzugt solche von Carboxylaten, die mindestens sechs Kohlenstoffatome, ganz besonders bevorzugt mindestens acht Kohlenstoffatome aufweisen, insbesondere Zink-(II)-diacetat oder Zink-(II)-dioctoat oder Zink-(ll) neodecanoat. Handelsübliche Katalysatoren sind beispielsweise Borchi^{®} Kat 22 von OMG Borchers GmbH, Langenfeld, Deutschland.

Unter den Wismut-Katalysatoren sind die Wismut-carboxylate bevorzugt, besonders bevorzugt solche von Carboxylaten, die mindestens sechs Kohlenstoffatome aufweisen, insbesondere Wismut-octoate, -ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi^{®} Kat 24; 315; 320 von OMG Borchers GmbH, Langenfeld, Deutschland.

Es kann sich dabei auch um Gemische verschiedener Metalle handeln, wie beispielsweise in Borchi^{®} Kat 0245 von OMG Borchers GmbH, Langenfeld, Deutschland

Unter den Titanverbindungen sind die Titan tetra-alkoholate Ti(OR)₄ bevorzugt, besonders bevorzugt solche von Alkoholen ROH mit 1 bis 8 Kohlenstoffatomen, beispielsweise Methanol, Ethanol, *iso*-Propanol, n-Propanol, n-Butanol, *iso*-Butanol, *sek*-Buta-nol, *tert-*Butanol, n-Hexanol, n-Heptanol, n-Octanol, bevorzugt sind Methanol, Ethanol, *iso*-Propanol, n-Propanol, n-Butanol, *tert-*Butanol, besonders bevorzugt sind *iso*-Pro-panol und n-Butanol.

In einer weiteren bevorzugten Ausführungsform werden solche Verbindungen eingesetzt, wie in der WO 00/39183, S.4, Z. 3 bis S. 10, Z. 19 beschrieben, deren Offenbarung hiermit Bestandteil der vorliegenden Schrift sei. Besonders bevorzugt sind unter diesen solche Verbindungen, die als Aufbaukomponenten mindestens ein Allophanatgruppen aufweisendes, (cyclo)aliphatisches Isocyanat und mindestens ein Hydroxyalkyl(meth)acrylat aufweisen, ganz besonders bevorzugt die Produkt Nr. 1 bis 9 in Tabelle 1 auf S. 24 der WO 00/39183.

### Wasseremulgierbares Thiol (B)

Das Thiol (B) enthält erfindungsgemäß als Aufbaukomponenten,
- (Ba): mindestens eine Verbindung die mindestens zwei Mercaptogruppen aufweist,
- (Bb): mindestens eine Verbindung, die mindestens eine gegenüber Mercapto reaktive Gruppe und mindestens eine dispergieraktive Gruppe aufweist,
wobei die Aufbaukomponente (Ba) einen Hansch Parameter von mindestens 2,0 aufweist.

Die Aufbaukomponente (Ba) weist erfindungsgemäß mindestens zwei Mercaptogruppen auf, beispielsweise zwei bis sechs, bevorzugt zwei bis vier und besonders bevorzugt drei bis vier.

Als Mercaptogruppen werden erfindungsgemäß -SH Gruppen verstanden, besonders solche, die an tertiäre Kohlenstoffatome, Methingruppen oder Methylengruppen gebunden sind, besonders bevorzugt solche, die an Methylengruppen gebunden sind.

Die Aufbaukomponente (Ba) weist erfindungsgemäß einen Hansch Parameter von mindestens 2,0 auf, bevorzugt von mindestens 2,0 und von höchstens 4,0, besonders bevorzugt von mindestens 2,6 bis höchstens 3,6.

Dabei sind die Hansch-Parameter generell ein Maß für die Hydrophobie von chemischen Verbindungen wie beispielsweise Monomeren und den daraus gebildeten Polymeren.

Die theoretischen Grundlagen der Berechnung der Hansch-Parameter stammen aus: Hansch, Fujita, J. Amer. Chem. Soc., 1964, 86, Seiten 1616-1626; H. Kubinyi, Methods and Principles of Medicinal Chemistry, Volume 1, R. Mannhold et al., Herausgeber VCH, Weinheim (1993); C. Hansch and A. Leo, Substituent Constants for Correlation Analysis, in Chemistry and Biology, Wiley, New York (1979); und C. Hansch, P. Maloney, T. Fujita, and R. Muir, Nature, 1962, 194, Seiten 178-180.

Zur Berechnung von Hansch-Parameteren kann generell die Software "KOWWIN v1.68" (September 2010) genutzt werden, die durch die US Enviromental Protection Agency (EPA) als "E-stimation Programs Interface Suite^{™} for Microsoft^{®} Windows, v4.11" [2012], United States Environmental Protection Agency, Washington, DC, USA, der Öffentlichkeit zur Verfügung gestellt ist. Nach diesem Programm wurden die Hansch-Parameter für die u.a. in dieser Schrift eingesetzten Aufbaukomponenten (Ba) ermittelt.

| Thiol (Kürzel) | errechneter individueller Hansch-Parameter | |
|---|---|---|
| ethoxyliertes Trimethylolpropan-Trismercaptopropionat | ETTMP 1300 | ≤ 0*) |
| Glykol-Dimercaptoacetat | GDMA | 0,3 |
| Pentaerythrit-Tetramercaptoacetat | PETMA | 0,6 |
| Glykol-Dimercaptopropionat | GDMP | 1,3 |
| Trimethylolpropan-Trismercaptoacetat | TMPMA | 1,6 |
| ethoxyliertes Trimethylolpropan-Trismercaptopropionat | ETTMP 700 | 1,7 |
| Pentaerythrit-Tetramercaptopropionat | PETMP | 2,6 |
| Trimethylolpropan-Trismercaptopropionat | TMPMP | 3,1 |
| Dipentaerythrit-Hexamercaptopropionat | DIPETMP | 3,6 |
| Polycaprolacton-Tetramercaptopropionat | PCL4MP 1350 | 3,8**⁾ |
| Tris[2-(3-mercaptopropionyloxy)ethyl]-lsocyanurat | TEMPIC | 4,0 |

| | | |
|---|---|---|
| *) Schätzung **) für Substruktur | | |

Bevorzugt weisen die Aufbaukomponenten (Ba) ein Molekulargewicht kleiner als 1500 g/mol, besonders bevorzugt kleiner als 1000 g/mol, ganz besonders bevorzugt kleiner als 500 g/mol auf.

In einer bevorzugten Ausführungsform sind die Aufbaukomponenten (Ba) bei 20°C und einem Druck von 1 ,01325 bar flüssig.

Insbesondere bevorzugte Aufbaukomponenten (Ba) sind Trimethylolpropan-Trismercaptopropionat (= TMPMP), Pentaerythrit-Tetramercaptopropionat (= PETMP), Dipentaerythrit-Hexamercaptopropionat (=DIPETMP) sowie Polycaprolacton-Tetramercaptopropionat (= PCL4MP 1350).

Die Aufbaukomponente (Bb) weist erfindungsgemäß mindestens eine gegenüber Mercapto reaktive Gruppe und mindestens eine dispergieraktive Gruppe auf.

Bei der gegenüber Mercapto reaktiven Gruppe handelt es sich bevorzugt um eine Glyzidyl, Maleimid, Fumarat, Maleat, Acrylat, Itaconat, Acrylamid, Methylenmalonat, Crotonat, Cinnamat, Methacrylamid und/oder Methacrylat Gruppe. Besonders bevorzugt sind ungesättigte Gruppen, ganz besonders bevorzugt handelt es sich um eine Acryat oder Metharcylat Gruppe.

Bei der dispergieraktiven Gruppe kann es sich zum Beispiel um eine ionische oder in eine ionische Gruppe überführbare Gruppe handeln.

Anionische bzw. in anionische Gruppen überführbare Gruppen sind zum Beispiel Carbonsäure-, Phosphonsäure- oder Sulfonsäuregruppen, aber auch Phosphorsäure- oder Schwefelsäure-Halbestergruppen.

Bevorzugte Anionische bzw. in anionische Gruppen überführbare Gruppen sind Phosph(on)at-, Sulf(on)at- und/oder Carboxylat-Gruppen.

Kationische bzw. in kationische Gruppen überführbare Gruppen sind zum Beispiel quarternäre Ammoniumgruppen bzw. tertiäre, sekundäre oder primäre Aminogruppen.

In ionische Gruppen überführbare Gruppen werden vorzugsweise vor oder während der Dispergierung der erfindungsgemäßen Mischung in Wasser in ionische Gruppen überführt.

Zur Überführung zum Beispiel von Carbonsäuregruppen oder Sulfonsäuregruppen in anionische Gruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung von Aminogruppen in die entsprechenden Kationen, z.B. Ammonium-gruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid geeignet. Weitere geeignete Neutralisations- und Quaternierungsmittel sind z.B. in der US-PS 3 479 310, Spalte 6, beschrieben.

Der Gehalt der ionischen Gruppen bzw. in ionische Gruppen überführbare Gruppen beträgt vorzugsweise 0,1 bis 1,0 mol pro kg der Komponente (B).

Bei der dispergieraktiven Gruppe kann es sich zum Beispiel um eine nichtionische, hydrophile Gruppe handeln.

Nichtionische Gruppen sind z.B. Polyalkylenethergruppen, insbesondere solche mit 5 bis 50 Alkylenoxideinheiten.

Bevorzugt sind Polyethylenethergruppen oder Polyalkylenethergruppen, die neben anderen Alkylenoxideinheiten, z.B. Propylenoxid, mindestens 5, bevorzugt mindestens 7 Ethylenoxideinheiten enthalten. Besonders bevorzugt sind Polyethylenethergruppen.

Der Gehalt der hydrophilen nichtionischen Gruppen, insbesondere der Polyalkylenethergruppen beträgt vorzugsweise 5 bis 30 Mol-%, besonders bevorzugt 10 bis 20 Mol-%, bezogen auf die Komponente (Ba).

Ebenfalls bevorzugt handelt es sich bei der mindestens einen dispergieraktiven Gruppe um Polyalkylenetheralkohole, besonders bevorzugt um Polyethylenetheralkohole (= halbseitig verschlossenes PEG) oder Polyethylenglykol.

Die Polyalkylenetheralkohole und Polyethylenetheralkohole weisen bevorzugt ein Molekulargewicht Mn von mindestens 200, besonders bevorzugt mindestens 300 g/mol auf. Das Molekulargewicht Mn kann prinzipiell nach oben unbegrenzt sein, bevorzugt bis zu 2.200, besonders bevorzugt bis zu 1.200 g/mol und ganz besonders bevorzugt bis zu 800 g/mol betragen.

Insbesondere bevorzugte Aufbaukomponenten (Bb) sind (Meth)acrylsäure, beta-Carboxyethylacrylat, Phosphorsäure-Halbester eines Polypropylenglykol-Methacrylats, Phosphorsäure-Halbester von Hydroxyethylmethacrylat, 2-Acrylamido-2-methylpropansulfonsäure, Sulf(at)oethyl-Methacrylat, Sulfopropyl-Methacrylat sowie die Natrium- oder Ammonium-Salze aller vorgenannten Verbindungen, Natrium-Styrolsulfonat und Mono(meth)acrylsäureester von reinem oder einfach Endgruppen-verschlossenem Polyethylenglykol.

Ganz besonders bevorzugte Aufbaukkomponenten (Bb) sind Methacrylsäure, beta-Carboxyethylacrylat (= Sipomer^{®} β-CEA) sowie Methacrylsäure-Monoester von Methoxypolyethylenglykol (z.B. Bisomer^{®} MPEG-350 MA, Bisomer^{®} MPEG-550 MA oder Bisomer^{®} S-7-W).

Zur Herstellung Komponente (B) wird die mindestens eine Aufbaukomponente (Ba) umgesetzt mit mindestens einer Verbindung (Bb).

Bevorzugte Komponenten (B) sind solche mit hydrophilen, nichtionischen Gruppen, insbesondere Polyalkylenethergruppen. Vorzugsweise wird dabei die Wasseremulgierbarkeit allein durch die hydrophilen nichtionischen Gruppen erreicht.

Das Thiol (B) kann dann unter Eintrag mechanischer Energie in Wasser emulgiert werden. Bevorzugt beträgt das Verhältnis von Thiol (B) zu Wasser 25:75 bis 80:20, besonders bevorzugt 30:70 bis 40:60, ganz besonders bevorzugt 30:70 bis 50:50.

Zur Herstellung der erfindungsgemäßen Beschichtungsmassen werden die Polymermischung (A) und das Thiol (B) entweder getrennt voneinander hergestellt und anschließend die wässrige Dispersion der Polymermischung (A) und die wässrige Emulsion des Thiols (B) miteinander vermischt oder es wird die Polymermischung (A) als wässrige Dispersion hergestellt und das Thiol (B) in diese so erhaltene wässrige Dispersion eingemischt.

Wesentlich ist, dass die erfindungsgemäßen zweikomponentigen Beschichtungsmassen ≥ 20 Gew.-% vorteilhaft ≥ 30 Gew.-% und insbesondere vorteilhaft ≥ 30 Gew.-% an Wasser und ≤ 5 Gew.-%, vorteilhaft ≤ 3 Gew.-% und insbesondere vorteilhaft ≤ 1 Gew.-% an organischem Lösungsmittel enthält. In entsprechender Weise weist die erfindungsgemäße Bindemittelformulierung einen Gehalt an aktiven Bindemittelkomponenten, gebildet aus der Summe der wenigstens einen Polymermischung (A) und dem wenigstens einen Thiol (B), im Bereich ≥ 5 und ≤ 75 Gew.-%, vorteilhaft im Bereich ≥ 10 und ≤ 70 Gew.-% und besonders vorteilhaft im Bereich ≥ 30 und ≤ 60 Gew.-% auf.

Bevorzugt beträgt das molare Verhältnis von gegenüber Mercaptoreaktiven Gruppen aus der wasserdispergierbaren Polymermischung (A) zu Mercapto-Gruppen in Thiol (B) von 3:1 bis 1:1,1, besonders bevorzugt von 2:1 bis 1:1,05, ganz besonders bevorzugt 2:1 bis 1:1.

Die erfindungsgemäßen zweikomponentigen Beschichtungsmassen können verwendet werden zur Beschichtung von verschiedenen Substraten, wie z. B. Holz, Holzfurnier, Papier, Pappe, Karton, Textil, Leder, Vlies, Kunststoffoberflächen, Glas, Keramik, mineralische Baustoffe, Metalle oder beschichtete Metalle.

Bei einer Verwendung in Beschichtungsmitteln können die erfindungsgemäßen zweikomponentigen Beschichtungsmassen in Grundierungen, Füllern, pigmentierten Decklacken und Klarlacken im Bereich Autoreparatur- oder Großfahrzeuglackierung eingesetzt werden. Besonders geeignet sind solche Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die erfindungsgemäßen Beschichtungsmassen eignen sich zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, insbesondere in Form von Folien, besonders bevorzugt Metallen.

Die erfindungsgemäßen Beschichtungsmassen eignen sich als oder in Außenbeschichtungen, also solche Anwendungen, die dem Tageslicht ausgesetzt sind, bevorzugt von Gebäudeteilen, Innenbeschichtungen, Beschichtungen auf Fahrzeugen und Flugzeugen. Insbesondere werden die erfindungsgemäßen Beschichtungsmassen als oder in Automobilklar- und -decklacke(n) eingesetzt. Weitere bevorzugte Einsatzgebiete sind Can-Coating und Coil-Coating.

Besonders eignen sie sich als Grundierungen, Füller, pigmentierte Decklacke und Klarlacke im Bereich Industrie-, Holz-, Auto-, insbesondere OEM- Lackierung, oder Dekolackierung eingesetzt werden. Ganz besonders geeignet sind die Beschichtungsmittel für Anwendungen, in denen eine besonders hohe Applikationssicherheit, Außenwitterungsbeständigkeit, Optik, Kratzbeständigkeit, Lösemittel- und/oder Chemikalienbeständigkeit gefordert werden.

Weiterhin können die zweikomponentigen Beschichtungsmassen optional weitere lacktypische Additive enthalten.

Als weitere lacktypische Additive können beispielsweise Antioxidantien, Stabilisatoren, Aktivatoren (Beschleuniger), Photo-Initiatoren, Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Photoinitiatoren können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SI-TA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO der BASF AG), Ethyl-2,4,6-tri-methylbenzoylphenylphosphinat (Lucirin^{®} TPO L der BASF AG), Bis-(2,4,6-trimethylbenzoyl)-phenylphosphinoxid (Irgacure^{®} 819 der Firma Ciba Spezialitätenchemie), Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert-*Butylanthrachinon, Anthrachinoncarbonysäureester, Benzaldehyd, α-Tetralon, 9-Acetylphenanthren, 2-Acetylphe-nanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethyl-thioxanthon, 2,4-Di-*iso*-propylthioxanthon, 2,4-Dichlorthioxanthon, Benzoin, Benzoin-*iso*-butyl-ether, Chloroxanthenon, Benzoin-tetrahydropyranylether, Benzoinmethylether, Benzoinethyl-ether, Benzoin-butylether, Benzoin-*iso*-propylether, 7-H-Benzoinmethylether, Benz[de]an-thracen-7-on, 1-Naphthaldehyd, 4,4'-Bis(dimethylamino)benzophenon, 4-Phenylben-zophenon, 4-Chlorbenzophenon, Michlers Keton, 1-Acetonaphthon, 2-Acetonaphthon, 1-Benzoylcyclo-hexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben.

Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Dimethoxy-2-phenylacetophenon.

Die Beschichtungsmassen enthalten die Photoinitiatoren vorzugsweise in einer Menge von 0,05 bis 10 Gew. -%, besonders bevorzugt 0, 1 bis 8 Gew. -%, insbesondere 0,2 bis 5 Gew. -%, bezogen auf die Gesamtmenge des Urethan(meth)acrylats (A).

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis*iso*-butyronitril, Cyclohexylsulfonylacetylperoxid, Di-*iso*-propylpercarbonat, *tert*-Butylperoktoat oder Benzpinakol, sowie beispielsweise solche thermisch aktivierbare Initiatoren, die eine Halbwertszeit bei 80 °C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose, hydrophob modifiziertes Polyurethan oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Es stellt einen Vorteil der vorliegenden Erfindung dar, dass die Beschichtungsmassen der Viskosität nicht notwendigerweise ein Lösungsmittel enthalten müssen, beispielsweise Butylacetat, Essigester, Methoxypropylacetat, Toluol, Xylol, fluorierte Aromaten, aliphatische und aromatische Kohlenwasserstoffgemische.

Bevorzugt sind daher erfindungsgemäß solche Beschichtungsmassen, die im Wesentlichen frei von organischen Lösungsmitteln sind.

Die Beschichtung der Substrate mit den erfindungsgemäßen Beschichtungsmassen erfolgt nach üblichen, dem Fachmann bekannten Verfahren, wobei man eine erfindungsgemäße Beschichtungsmasse oder eine solche enthaltend Lackformulierung auf das zu beschichtende Substrat in der gewünschten Stärke aufbringt und optional trocknet. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man das eine erfindungsgemäßen Beschichtungsmasse oder eine solche enthaltende Lackformulierung, optional mit weiteren lacktypischen Additiven und thermisch, chemisch oder strahlungshärtbaren Harzen versetzt, auf das Substrat aufbringt und optional trocknet, mit Elektronenstrahlen oder UV Belichtung unter sauerstoffhaltiger Atmosphäre oder bevorzugt unter Inertgas härtet, optional bei Temperaturen bis zur Höhe der Trocknungstemperatur und anschließend bei Temperaturen bis zu 160°C, bevorzugt zwischen 60 und 160 °C, besonders bevorzugt zwischen 100 und 160 °C, thermisch behandelt.

Die Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren ein- oder mehrfach appliziert werden.

Die Trocknung und Aushärtung der Beschichtungen erfolgt im Allgemeinen unter normalen Temperaturbedingungen, d.h. ohne Erhitzung der Beschichtung. Die erfindungsgemäßen Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden. Dies ist begrenzt durch die Thermostabilität des Substrats.

Optional kann, wenn mehrere Schichten des Beschichtungsmittels übereinander aufgetragen werden, nach jedem Beschichtungsvorgang eine Trocknung erfolgen.

Die Trocknung kann auch zusätzlich zur oder anstelle der thermischen Behandlung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Eine mögliche Strahlungshartung kann durch Einwirkung energiereicher Strahlung, also UV-Strahlung oder Tageslicht, vorzugsweise Licht der Wellenlange 250 bis 600 nm oder durch Bestrahlung mit energiereichen Elektronen (Elektronenstrahlung; 150 bis 300 keV) erfolgen. Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Hartung liegt im Bereich von 80 bis 3000 mJ/cm². Bevorzugt sind Quecksilber-Niederdruckstrahler, - Mitteldruckstrahler mit Hochdruckstrahler, die optional mit Gallium oder Eisen dotiert sein können, sowie ferner LED-Strahler.

Die Bestrahlung kann gegebenenfalls auch unter Ausschluss von Sauerstoff, z. B. unter Inertgas-Atmosphäre, durchgeführt werden. Als Inertgase eignen sich vorzugsweise Stickstoff, Edelgase, Kohlendioxid oder Verbrennungsgase. Des Weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

In einem weiteren Verfahren erfolgt die Aushärtung kontinuierlich, indem man das mit der Beschichtungsmasse behandelte Substrat mit konstanter Geschwindigkeit an einer Strahlungsquelle vorbeiführt. Hierfür ist es erforderlich, dass die Aushärtungsgeschwindigkeit der Beschichtungsmasse ausreichend hoch ist.

Diesen unterschiedlichen zeitlichen Verlauf der Hartung kann man sich insbesondere dann zu Nutze machen, wenn sich an die Beschichtung des Gegenstandes noch ein Verarbeitungsschritt anschließt, bei dem die Filmoberfläche in direkten Kontakt mit einem anderen Gegenstand tritt oder mechanisch bearbeitet wird.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

### Abkürzungen / Chemikalien:

| | |
|---|---|
| Bisomer^{®} MPEG 350 MA | Methoxypolyethylenglykol-Methacrylat (8x EO) |
| Bisomer^{®} MPEG 550 MA | Methoxypolyethylenglykol-Methacrylat (12-13x EO) |
| Bisomer^{®} S 10 W | Methoxypolyethylenglykol-Methacrylat (22-23x EO), 50%ige wässrige Lösung |
| DMPP | Dimethyl-Phenylphosphan |
| Dowfax^{®} 2A1 | anionisches Tensid auf Basis eines C₁₂-Diphenyloxid-Disulfonats; 45%ige wässrige Lösung |
| ETTMP 1300 | ethoxyliertes Trimethylolpropan-Trismercaptopropionat |
| EpiRez^{®} 3510-W-60 | 60%ige, wässrige Epoxidharz-Emulsion auf Basis Bisphenol-A-Diglyzidylyether |
| Laromer^{®} GPTA | propoxyliertes Glyzerin-Triacrylat |
| Laromer^{®} UA 8949 | 40%ige, wässrige Urethanacrylat-Dispersion |
| Laromer^{®} UA 9064 | 38%ige, wässrige Urethanacrylat-Dispersion |
| Laromer^{®} UA 9095 | 38%ige, wässrige Urethanacrylat-Dispersion |
| Lutensol^{®} TO 82 | nichtionisches Tensid auf Basis eines gesättigten iC₁₃-Oxo-alkohols mit 8 EO-Einheiten; 20%ige wässrige Lösung |
| PETM P | Pentraerytrit-Tetramerkaptopropionat |
| Pluriol^{®} A 10 R | Polyethylenglycol-Allylether (10x EO) |
| Sipomer^{®} β-CEA | beta-Carboxyethylacrylat |
| Sipomer^{®} PAM 200**⁾ | Phosphorsäure-Halbester eines Polypropylenglykol-Methacrylats |
| Sipomer^{®} PAM 4000 | Phosphorsäure-Halbester von Hydroxyethylmethacrylat |
| TMPMP | Trimethylolpropan-Trismerkaptopropionat |
| Waterpoxy^{®} 1422 | 55%ige, wässrige Epoxidharz-Dispersion |
| Waterpoxy^{®} 1455 | 56%ige, wässrige Epoxidharz-Dispersion |

### Beispiele

### 1) Synthese der wasseremulgierbaren Thiole (B)

### Allgemeine Arbeitsvorschrift A-1:

In einem 100ml-Dreihalskolben werden 30,0 g TMPMP (76,4 mmol) und die jeweiligen Mengen an Modifizierungsmittel eingewogen und bei Raumtemperatur durch Rühren vermischt. Nach Zugabe von 0,09 µl DMPP (0,76 mmol, entsprechend 1,0 mol% bezogen auf TMPMP) wird die Reaktionsmischung auf 40 °C erwärmt und für 2 Stunden bis zu einem Umsatz ≥95% reagieren gelassen.

Die Umsatz-Kontrolle erfolgt ¹H-NMR-spektroskopisch in CDCl₃ oder d₆-Aceton als Lösemittel.
a) nichtionische Modifikation

| mod. Polythiol | Modifizierungsmittel | |
|---|---|---|
| | Type | Menge |
| TMPMP-1a | Bismomer^{®} MPEG 350 MA | 3,29 g (= 10 mol%) |
| TMPMP-1b | Bismomer^{®} MPEG 350 MA | 4,93 g (= 15 mol%) |
| TMPMP-1c | Bismomer^{®} MPEG 350 MA | 6,57 g (= 20 mol%) |
| TMPMP-2a | Bismomer^{®} MPEG 550 MA | 4,80 g (= 10 mol%) |
| TMPMP-2b | Bismomer^{®} MPEG 550 MA | 7,20 g (= 15 mol%) |
| TMPMP-2c | Bismomer^{®} MPEG 550 MA | 9,60 g (= 20 mol%) |
| TMPMP-3a | Bisomer^{®} S 10 W | 16,5 g (= 10 mol%) |
| TMPMP-3c | Bisomer^{®} S 10 W | 33,0 g (= 20 mol%) |
| TMPMP-4a | Pluriol^{®} A 10 R*⁾ | 3,80 g (= 10 mol%) |

| | | |
|---|---|---|
| *) Aufgrund der geringen Reaktivität des Allylethers musste für ausreichenden Umsatz die Reaktionsmischung 8 Stunden bei 60°C bzw. 4,5 Stunden bei 80°C erhitzt werden. | | |

b) anionische Modifikation

| mod. Polythiol | Modifizierungsmittel | |
|---|---|---|
| | Type | Menge |
| TMPMP-5a | Acrylsäure | 0,55 g (= 10 mol%) |
| TMPMP-6a | Methacrylsäure | 0,66 g (= 10 mol%) |
| TMPMP-7a | Sipomer^{®} β-CEA | 1,10 g (= 10 mol%) |
| TMPMP-8a | Sipomer^{®} PAM 200**⁾ | 3,71 g (= 10 mol%) |
| TMPMP-9a | Sipomer^{®} PAM 4000 | 1,61 g (= 10 mol%) |
| TMPMP-10***) | Methacrylsäure + Laurylmethacrylat | 0,66 g (= 10 mol%) |
| | | 1,94 g (= 10 mol%) |

| | | |
|---|---|---|
| **) Umsatz lag nur bei ca. 80%. ***) Für die Herstellung von TMPMP-10 wurden 3,75 g PETMP (= 10 mol%) mit den genannten Modifizierungsmitteln vor-reagieren gelassen und im Anschluss mit 26,3 g TMPMP versetzt. | | |

### 2) Prüfung der selbst-emulgierenden Wirkung

### Allgemeine Arbeitsvorschrift A-2:

Das modifizierte TMPMP wird im Gewichtsverhältnis 1:2 mit Wasser vermischt und mit einem Ultra-Turrax T25 emulgiert; der Energieeintrag erfolgte für 10 Sekunden bei 11 000 Umdrehungen pro Minute. Als Standardeinwaage werden 3,0 g modifiziertes TMPMP und 6,0 g VE-Wasser in ein Becherglas (50 ml) eingewogen, um das oben beschriebene Verhältnis Öl- zu Wasser-Phase herzustellen. Für Versuche, bei denen das Modifizierungsmittel bereits als wässrige Lösung vorliegt, muss entsprechend weniger VE-Wasser eingewogen werden. Im Falle anionisch modifizierter Polythiole (TMPMP-5a bis -10) wurde dem Wasser geringe Mengen an Base (Natronlauge oder Ammoniak) hinzugefügt, um die Säuregruppen des modifizierten Polythiols zu deprotonieren; der pH-Wert der wässrigen Phase wird auf den Bereich 8-9 eingestellt. Im Anschluss an die Herstellung der o/w-Emulsion wird zur Stabilitätskontrolle in regelmäßigen zeitabständen eine Sichtkontrolle der Probe durchgeführt.

### Vergleichsversuch V-1:

Vorgehensweise wie in A-2 beschrieben mit dem Unterschied, dass anstelle des hydrophil modifizierten TMPMP reines, nicht-modifiziertes TMPMP verwendet wird.

### Vergleichsversuch V-2:

Vorgehensweise wie in A-2 beschrieben mit dem Unterschied, dass anstelle des hydrophil modifizierten TMPMP reines, nicht-modifiziertes TMPMP verwendet wird. Als externe Emulgatoren kommt eine Mischung aus 0,027g Dowfax^{®} 2A1 (0,4 Gew.% bezogen auf TMPMP) und 0,090g Lutensol^{®} TO 82 (0,6 Gew.% bezogen auf TMPMP) zum Einsatz.

**Tabelle X: Stabilität verschiedener o/w-Emulsionen auf Basis (modifiziertes) TMPMP**

| Polythiol | Emulsionsstabilität |
|---|---|
| V-1 | bricht innerhalb weniger Minuten |
| V-2 | bricht innerhalb weniger Minuten |
| TMPMP-1a | Phasentrennung nach 2 Stunden |
| TMPMP-1b | Phasentrennung nach 3½ Stunden |
| TMPMP-1c | Phasentrennung nach 4½ Stunden |
| TMPMP-2a | Phasentrennung nach 5 Stunden |
| TMPMP-2b | Phasentrennung nach 3 Stunden |
| TMPMP-2c | Phasentrennung nach 3 Stunden |
| TMPMP-3a | Phasentrennung nach 3½ Stunden |
| TMPMP-3c | Phasentrennung nach 2½ Stunden |
| TMPMP-4a | Phasentrennung nach 3½ Stunden |
| TMPMP-5a | Phasentrennung nach 1-2 Stunden |
| TMPMP-6a | Phasentrennung nach 1-2 Stunden |
| TMPMP-7a | Phasentrennung nach 1-2 Stunden |
| TMPMP-8a | Phasentrennung nach 1-2 Stunden |
| TMPMP-9a | Phasentrennung nach 1-2 Stunden |
| TMPMP-10 | Phasentrennung nach 1-2 Stunden |

| | |
|---|---|
| 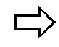 o/w-Emulsionen mit nicht-modifiziertem TMPMP sind selbst durch Zugabe von externen Emulgatoren nicht stabil. Nur die Verwendung von hydrophil modifiziertem, "selbstdispergierendem" TMPMP resultiert in ausreichend stabilen o/w-Emulsionen. | |

### 3) Verträglichkeit mit wasserdispergierbarer Polymermischung (A)

Die in der Tabelle aufgeführten, wasserdispergierbare Polymermischungen (A)wurden mit äquimolaren Mengen an Thiol (B) (o/w-Emulsion oder wässrige Lösung) versetzt und die Stabilität der Abmischungen geprüft. Ziel dabei war es, ohne sichtbare Änderungen eine Verarbeitungszeit von 2 Stunden zu erfüllen.

**Tabelle Y: Formulierungsstabilität gegenüber verschiedenen Reaktivharz-Emulsionen**

| | V-1 | V-2 | TMPMP-2a | ETTMP 1300 |
|---|---|---|---|---|
| Laromer^{®} GPTA*) | -- | geliert innerhalb weniger Minuten + Wärme-Tönung | stabil | -- |
| Laromer^{®} UA 8949 | Phasentrennung nach 5 min | -- | stabil | -- |
| Laromer^{®} UA 9064 | -- | -- | stabil | geliert innerhalb von 2h") |
| Laromer^{®} UA 9095 | Phasentrennung nach 5 min | -- | stabil | -- |
| EpiRez^{®} 3510-W-60 | Koagulat | -- | stabil | -- |
| Waterpoxy^{®} 1422 | Koagulat | -- | stabil | -- |
| Waterpoxy^{®} 1455 | Koagulat | -- | stabil | -- |

| | | | | |
|---|---|---|---|---|
| *) als 30%ige wässrige Emulsion, stabilisiert mit externen Emulgatoren (0,4% Dowfax^{®} 2A1 + 0,6% Lutensol^{®} TO 82) **) Vergleichsbeispiel 1 aus WO 2013/139602 | | | | |

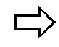 Nur Abmischungen mit den erfindungsgemäßen TMPMP-Emulsionen sind stabil. Für nicht hydrophil modifiziertes TMPMP (V-1 bzw. V-2) oder wasserlösliches TMPMP (ETTMP 1330) werden Instabilitäten beobachtet.

### 4) Anwendungstechnische Prüfung in Formulierung mit wässrigen Urethanacrylat-Dispersionen

Zur Untersuchung der mechanisch-technologischen Eigenschaften derartig vernetzter Polymerfilme werden aus den Harz- und Härter-Komponenten Formulierungen gefertigt, welche dann zur Bestimmung der Pendelhärte als dünne Filme auf Glasplatten aufgezogen beziehungsweise zur Bestimmung der Vernetzungsdichte als Dickschicht-Filme ausgegossen werden. Hierfür wird das modifizierte Thiocure^{®} TMPMP nach den oben beschriebenen Bedingungen emulgiert und mit der jeweiligen C=C-funktionellen Harz-Komponente unter Rühren mit dem Ultra-Turrax (10 Sekunden bei 11.000 Umdrehungen pro Minute) abgemischt. Der Glasplatten-Aufzug erfolgte an der unverdünnten Probe bei einer Nass-Schichtdicke von 200 µm. Für die Messung der vernetzenden Wirkung wird die Abmischung durch Zugabe von VE-Wasser auf einen Feststoffgehalt von 20% verdünnt, in eine runde Form (Øinnen ca. 6,9 cm) gegossen und für 7 Tage bei Raumtemperatur getrocknet.

Zu Vergleichszwecken wurden die beiden strahlungshärtbaren Urethanacrylat-Dispersionen auch UV-gehärtet, hierzu wurden diese jeweils mit 2 Gew.% Irgacure^{®} 500 als Photo-Initiator versetzt und die resultierenden Polymerfilme durch die Einwirkung von UV-Licht vernetzt (Gesamtexposition 752 mJ/cm², Spitzenbestrahlungsstärke 1,39 W/cm²).

Die Bestimmung der Pendelhärte erfolgte gemäß DIN-Norm 53 157 nach einer Trockenzeit von 6 Tagen bei Raumtemperatur und einem zusätzlichen Tag bei 60°C, die Angabe des Messergebnisses erfolgt dabei in Anzahl an Pendelschlägen.

Die Vernetzungsdichte wurde indirekt über den Masseverlust der Probe nach Lösemittel-Lagerung wie folgt bestimmt: Ein etwa 2x2 cm großes und ca. 0,6 mm dickes Stück Polymerfilm wird vorab gewogen (= initiale Masse m₀) und in einem 100 ml Fläschchen in 60 ml Methylethylketon eingelegt für 24 Stunden unter leichtem Schütteln gelagert. Danach wird das verbliebene Material über einen 45µm Filter abfiltriert, im Trockenschrank einen Tag lang bei 40 °C rückgetrocknet und erneut ausgewogen (= Gelanteil m_{T}). Der Gelgehalt der vernetzten Probe in Prozent berechnet sich gemäß (m₀ - m_{T}) / m₀ x 100%.

Wie aus den in den Tabellen Z1 und Z2 zusammengefassten Ergebnissen ersichtlich führt die Verwendung der erfindungsgemäßen Polythiol-Emulsionen zu einer signifikanten Vernetzung der auf Urethanacrylat-Dispersionen basierten Polymerfilme, welches auf einem dem Standder-Technik (= SH-PUD) bzw. der Strahlungshärtung vergleichbaren Niveau liegt. Im Gegensatz dazu sind derartige Polymerfilme weniger hart und damit flexibler / elastischer, was sich in deutlich geringeren Pendelhärten manifestiert.

**Tabelle Z1: Anwendungstechnische Eigenschaften ausgewählter Formulierungen auf Basis Laromer^{®} 8949**

| | V-1 | Bsp. 1A | Bsp. 1B | Bsp. 2A | Bsp. 2B | Bsp. 3A | Bsp. 3B | V-2a | V-2b | V-3 |
|---|---|---|---|---|---|---|---|---|---|---|
| | | | | | | | | | | |
| Vernetzer | ohne | TMPMP-1b | | TMPMP-2b | | TMPMP-3a | | SH-PUD**⁾ | | UV-Licht |
| Menge*⁾ | -- | 21,0 | 28,0 | 21,0 | 28,0 | 21,0 | 28,0 | 39,0 | 52,0 | -- |
| | | | | | | | | | | |
| Pendelhärte | 40 | 57 | 53 | 56 | 53 | 44 | 51 | 101 | 107 | 86 |
| Gelgehalt | 0% | 35% | 76% | 58% | 71% | 52% | 58% | 62% | 81% | 79% |

| | | | | | | | | | | |
|---|---|---|---|---|---|---|---|---|---|---|
| *) In Gew.% fest/fest bezogen auf das C=C-funktionelle Bindemittel **) Beispiel 2 aus WO 2013/139602 | | | | | | | | | | |

**Tabelle Z2: Anwendungstechnische Eigenschaften ausgewählter Formulierungen auf Basis Laromer^{®} 9095**

| | V-4 | Bsp. 4A | Bsp. 4B | Bsp. 5A | Bsp. 5B | Bsp. 6A | Bsp. 6B | V-5a | V-5b | V-6 |
|---|---|---|---|---|---|---|---|---|---|---|
| | | | | | | | | | | |
| Vernetzer | ohne | TMPMP-1b | | TMPMP-2b | | TMPMP-3a | | SH-PUD**⁾ | | UV-Licht |
| Menge*⁾ | -- | 27,8 | 37,0 | 27,8 | 37,0 | 27,8 | 37,0 | 51,5 | 68,7 | -- |
| | | | | | | | | | | |
| Pendelhärte | 15 | 34 | 17 | 23 | 18 | 22 | 12 | 99 | 104 | 98 |
| Gelgehalt | 0% | 87% | 94% | 93% | 91% | 91% | 88% | 91% | 94% | 88% |

| | | | | | | | | | | |
|---|---|---|---|---|---|---|---|---|---|---|
| *) In Gew.% fest/fest bezogen auf das C=C-funktionelle Bindemittel **) Beispiel 2 aus WO 2013/139602 | | | | | | | | | | |

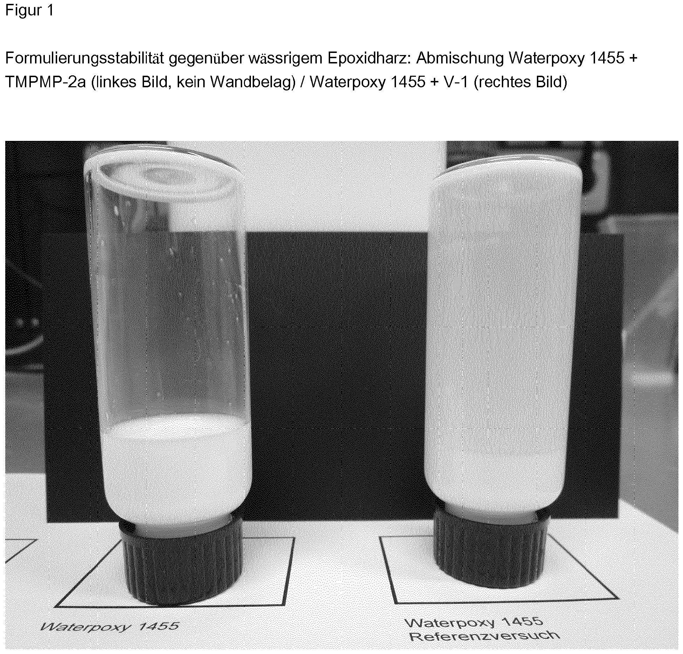

## Patentansprüche

1. Zweikomponentige Beschichtungsmasse enthaltend
mindestens eine wasserdispergierbare Polymermischung (A) welche mindestens eine gegenüber Mercapto reaktive Gruppe ausgewählt aus der Gruppe Epoxid und Michael-Akzeptor aufweist,
sowie
mindestens ein wasseremulgierbares Thiol (B) enthaltend als Aufbaukomponenten,
(Ba) mindestens eine Verbindung die mindestens zwei Mercaptogruppen aufweist,
(Bb) mindestens eine Verbindung, die mindestens eine gegenüber Mercapto reaktive Gruppe und mindestens eine dispergieraktive Gruppe aufweist,
wobei die Aufbaukomponente (Ba) einen Hansch Parameter von mindestens 2,0 aufweist.

2. Zweikomponentige Beschichtungsmasse gemäß Anspruch 1, **dadurch gekennzeichnet, dass** es sich bei der gegenüber Mercapto reaktiven Gruppe in der wasserdispergierbaren Polymermischung (A) um eine Itaconat, Methylenmalonat, Maleimid, Fumarat, Maleat, Glyzidyl, Acrylat, Acrylamid, Crotonat, Cinnamat, Methacrylamid und/oder Methacrylat Gruppe handelt.

3. Zweikomponentige Beschichtungsmasse gemäß Anspruch 1 oder 2, **dadurch gekennzeichnet, dass** die Polymermischung (A) ein Polyurethan-Acrylat, ein Polyester-Acrylat, ein Polyether-Acrylat, ein Epoxy-Acrylat, ein multi-funktionelles Acrylat-Monomer oder ein Glyzidylether-funktionelles Epoxidharz umfasst.

4. Zweikomponentige Beschichtungsmasse gemäß Anspruch einem der vorstehenden Ansprüche, **dadurch gekennzeichnet, dass** die Polymermischung (A) ein Polyurethan enthaltend als Aufbaukomponenten
(Aa) mindestens ein organisches aliphatisches, aromatisches oder cycloaliphatisches Di- oder Polyisocyanat
(Ab) mindestens eine Verbindung mit mindestens einer gegenüber Isocyanat reaktiven Gruppe und mindestens einer Itaconat, Methylenmalonat, Maleimid, Fumarat, Maleat, Acrylat, Acrylamid, Crotonat, Cinnamat, Methac-rylamid und/oder Methacrylat Gruppe,
(Ac) optional mindestens eine Verbindung mit mindestens zwei gegenüber Isocyanat reaktiven Gruppen,
(Ae) optional mindestens eine Verbindung mit genau einer gegenüber Isocyanat reaktiven Gruppe,
(Ag) mindestens eine Verbindung, die mindestens eine gegenüber Isocyanat reaktive Gruppe und mindestens eine dispergieraktive Gruppe aufweist,
umfasst.

5. Zweikomponentige Beschichtungsmasse gemäß Anspruch einem der vorstehenden Ansprüche, **dadurch gekennzeichnet, dass** es sich bei Komponente (Ba) um Ester mehrwertiger Alkohole mit Merkapto-Propionsäure handelt.

6. Zweikomponentige Beschichtungsmasse gemäß einem der vorstehenden Ansprüche, **dadurch gekennzeichnet, dass** es sich bei Komponente (Ba) um Trimethylolpropan-Trismercaptopropionat (TMPMP), Pentaerythrit-Tetramercaptopropionat (PETMP), Polycaprolacton-Tetramercaptopropionat (PCL4MP1350) oder Dipentaerythrit-Hexamercaptopropionat (DIPETMP) handelt.

7. Zweikomponentige Beschichtungsmasse gemäß einem der vorstehenden Ansprüche, **dadurch gekennzeichnet, dass** die Komponente (Bb) als dispergieraktive Gruppe eine Polyalkylenethergruppe enthält.

8. Zweikomponentige Beschichtungsmasse gemäß einem der vorstehenden Ansprüche, **dadurch gekennzeichnet, dass** die Komponente (Bb) als dispergieraktive Gruppe eine Polyethylenethergruppe enthält.

9. Zweikomponentige Beschichtungsmasse gemäß Anspruch 8, **dadurch gekennzeichnet, dass** die Polyethylenethergruppe ein Molekulargewicht Mn von 200 g/mol bis 2200 g/mol aufweist, wobei Mn durch Gelpermeationschromatographie mit Tetrahydrofuran und Polystyrol als Standard bestimmt wird.

10. Zweikomponentige Beschichtungsmasse gemäß einem Ansprüche 1 bis 6, **dadurch gekennzeichnet, dass** die Komponente (Bb) als dispergieraktive Gruppen anionische bzw. in eine anionische Gruppe überführbare Gruppen enthält.

11. Zweikomponentige Beschichtungsmasse gemäß Anspruch 10, **dadurch gekennzeichnet, dass** die anionische bzw. in eine anionische Gruppe überführbaren Gruppen Phosph(on)at-, Sulf(on)at- und/oder Carboxylat-Gruppen sind.

12. Verfahren zur Herstellung von wässrigen Dispersionen gemäß einem der vorstehenden Ansprüche, **dadurch gekennzeichnet, dass** man die Polymermischung (A) und Thiol (B) getrennt voneinander hergestellt und anschließend miteinander vermischt.

13. Verwendung einer zweikomponentigen Beschichtungsmassen nach einem der Ansprüche 1 bis 11 in Lacken und Anstrichmitteln.

14. Verwendung einer zweikomponentigen Beschichtungsmassen nach einem der Ansprüche 1 bis 11 zum Beschichten von Substraten.

15. Verwendung einer zweikomponentigen Beschichtungsmasse gemäß einem der Ansprüche 1 bis 11 zum Beschichten von Gebäudeteilen, Beschichtungen auf (Groß-)Fahrzeugen und Flugzeugen und industriellen Anwendungen, Eisenbahnen, Nutzfahrzeuge im landwirtschaftlichen und Baubereich, sogenannte ACE (agricultural construction and earthmoving equipment), Windenergieanlagen, Brücken, Gebäuden, Strommasten, Tanks, Containern, Pipelines, Kraftwerken, chemischen Anlagen, Schiffen, Kränen, Hallen, Dächern, Möbeln, Fenstern, Türen, Parkett, Karton, für Bodenbeläge, wie bei Parkdecks oder in Krankenhäusern, und insbesondere in Automobillacken als refinish-Anwendung, bevorzugt sind refinish, Kunststoff- und Industrieanwendungen, z.B. ACE.

## Claims

1. A two-component coating composition comprising
at least one water-dispersible polymer mixture (A) which has at least one
mercapto-reactive group selected from the group of epoxide and Michael acceptor,
and also
at least one water-emulsifiable thiol (B) comprising, as formation components,
(Ba) at least one compound having at least two mercapto groups,
(Bb) at least one compound having at least one mercapto-reactive group and at least one dispersing group,
wherein the formation component (Ba) has a Hansch parameter of at least 2.0.

2. The two-component coating composition according to claim 1, wherein the mercapto-reactive group in the water-dispersible polymer mixture (A) is an itaconate, methylenemalonate, maleimide, fumarate, maleate, glycidyl, acrylate, acrylamide, crotonate, cinnamate, methacrylamide and/or methacrylate group.

3. The two-component coating composition according to claim 1 or 2, wherein the polymer mixture (A) comprises a polyurethane acrylate, a polyester acrylate, a polyether acrylate, an epoxy acrylate, a multifunctional acrylate monomer or a glycidyl ether-functional epoxy resin.

4. The two-component coating composition according to any of the preceding claims, wherein the polymer mixture (A) comprises a polyurethane comprising, as formation components,
(Aa) at least one organic aliphatic, aromatic or cycloaliphatic di- or polyisocyanate,
(Ab) at least one compound having at least one isocyanate-reactive group and at least one itaconate, methylenemalonate, maleimide, fumarate, maleate, acrylate, acrylamide, crotonate, cinnamate, methacrylamide and/or methacrylate group,
(Ac) optionally at least one compound having at least two isocyanate-reactive groups,
(Ae) optionally at least one compound having exactly one isocyanate-reactive group,
(Ag) at least one compound having at least one isocyanate-reactive group and at least one dispersing group.

5. The two-component coating composition according to any of the preceding claims, wherein component (Ba) is esters of polyhydric alcohols with mercaptopropionic acid.

6. The two-component coating composition according to any of the preceding claims, wherein component (Ba) is trimethylolpropane trismercaptopropionate (TMPMP), pentaerythritol tetramercaptopropionate (PETMP), polycaprolactone tetramercaptopropionate (PCL4MP1350) or dipentaerythritol hexamercaptopropionate (DIPETMP).

7. The two-component coating composition according to any of the preceding claims, wherein component (Bb) comprises a polyalkylene ether group as dispersing group.

8. The two-component coating composition according to any of the preceding claims, wherein component (Bb) comprises a polyethylene ether group as dispersing group.

9. The two-component coating composition according to claim 8, wherein the polyethylene ether group has a molecular weight Mn of from 200 g/mol to 2200 g/mol, Mn being determined by gel permeation chromatography with tetrahydrofuran and polystyrene as standard.

10. The two-component coating composition according to any of claims 1 to 6, wherein component (Bb) comprises anionic groups or groups that can be converted into anionic groups as dispersing groups.

11. The two-component coating composition according to claim 10, wherein the anionic groups or groups that can be converted into anionic groups are phosph(on)ate, sulf(on)ate and/or carboxylate groups.

12. A process for preparing aqueous dispersions according to any of the preceding claims, wherein the polymer mixture (A) and thiol (B) are prepared separately from one another and then mixed with each other.

13. The use of a two-component coating composition according to any of claims 1 to 11 in coatings and paints.

14. The use of a two-component coating composition according to any of claims 1 to 11 for coating substrates.

15. The use of a two-component coating composition according to any of claims 1 to 11 for coating parts of buildings, coatings on (large) vehicles and aircraft, and industrial applications, railways, utility vehicles in agriculture and construction, what is known as ACE (agricultural construction and earthmoving equipment), wind turbines, bridges, buildings, power masts, tanks, containers, pipelines, power stations, chemical plants, ships, cranes, halls, roofs, furniture, windows, doors, wood flooring, cardboard, for floor coverings, such as in parking levels or in hospitals, and especially in automotive paints as refinish applications, with preference being given to refinish, plastics and industrial applications, e.g. ACE.

## Revendications

1. Masse de revêtement à deux composants contenant au moins un mélange polymère dispersible dans l'eau (A) qui présente au moins un groupe réactif vis-à-vis de mercapto choisi dans le groupe formé par époxyde et accepteur selon Michael, ainsi qu'au moins un thiol émulsifiable dans l'eau (B) contenant comme composants constitutifs,
(Ba) au moins un composé qui présente au moins deux groupes mercapto,
(Bb) au moins un composé qui présente au moins un groupe réactif vis-à-vis de mercapto et au moins un groupe à action dispersante,
le composant constitutif (Ba) présentant un paramètre de Hansch d'au moins 2,0.

2. Masse de revêtement à deux composants selon la revendication 1, **caractérisée en ce qu'**il s'agit, pour le groupe réactif vis-à-vis de mercapto dans le mélange polymère dispersible dans l'eau (A), d'un groupe itaconate, méthylènemalonate, maléimide, fumarate, maléate, glycidyle, acrylate, acrylamide, crotonate, cinnamate, méthacrylamide et/ou méthacrylate.

3. Masse de revêtement à deux composants selon la revendication 1 ou 2, **caractérisée en ce que** le mélange polymère (A) comprend un polyuréthane-acrylate, un polyesteracrylate, un polyétheracrylate, un époxyacrylate, un monomère multifonctionnel d'acrylate ou une résine époxyde à fonctionnalité glycidyléther.

4. Masse de revêtement à deux composants selon l'une quelconque des revendications précédentes, **caractérisée en ce que** le mélange polymère (A) comprend un polyuréthane contenant comme composants constitutifs
(Aa) au moins un diisocyanate ou polyisocyanate organique aliphatique, aromatique ou cycloaliphatique,
(Ab) au moins un composé présentant au moins un groupe réactif vis-à-vis d'isocyanate et au moins un groupe itaconate, méthylènemalonate, maléimide, fumarate, maléate, acrylate, acrylamide, crotonate, cinnamate, méthacrylamide et/ou méthacrylate,
(Ac) éventuellement au moins un composé présentant au moins deux groupes réactifs vis-à-vis d'isocyanate,
(Ae) éventuellement au moins un composé présentant exactement un groupe réactif vis-à-vis d'isocyanate,
(Ag) au moins un composé qui présente au moins un groupe réactif vis-à-vis d'isocyanate et au moins un groupe à action dispersante.

5. Masse de revêtement à deux composants selon l'une quelconque des revendications précédentes, **caractérisée en ce qu'**il s'agit, pour le composant (Ba), d'esters d'alcools polyvalents avec de l'acide mercaptopropionique.

6. Masse de revêtement à deux composants selon l'une quelconque des revendications précédentes, **caractérisée** en ce qui s'agit, pour le composant (Ba), de triméthylolpropane-tris-mercaptopropionate (TMPMP), de pentaérythritol-tétra-mercaptopropionate (PETMP), de polycaprolactone-tétra-mercaptopropionate (PCL4MP1350) ou de dipentaérythritol-hexa-mercaptopropionate (DIPETMP) .

7. Masse de revêtement à deux composants selon l'une quelconque des revendications précédentes, **caractérisée en ce que** le composant (Bb) contient un groupe polyalkylène-éther comme groupe à action dispersante.

8. Masse de revêtement à deux composants selon l'une quelconque des revendications précédentes, **caractérisée en ce que** le composant (Bb) contient un groupe polyéthylène-éther comme groupe à action dispersante.

9. Masse de revêtement à deux composants selon la revendication 8, **caractérisée en ce que** le groupe polyéthylène-éther présente un poids moléculaire Mn de 200 g/mole à 2200 g/mole, Mn étant déterminé par chromatographie par perméation de gel avec du tétrahydrofuranne et du polystyrène comme référence.

10. Masse de revêtement à deux composants selon l'une quelconque des revendications 1 à 6, **caractérisée en ce que** le composant (Bb) contient, comme groupe à action dispersante, des groupes anioniques ou des groupes pouvant être transformés en un groupe anionique.

11. Masse de revêtement à deux composants selon la revendication 10, **caractérisée en ce que** les groupes anioniques ou les groupes pouvant être transformés en un groupe anionique sont des groupes phosph(on)ate, sulf(on)ate et/ou carboxylate.

12. Procédé pour la préparation de dispersions aqueuses selon l'une quelconque des revendications précédentes, **caractérisé en ce qu'**on prépare le mélange polymère (A) et le thiol (B) séparément l'un de l'autre et on les mélange ensuite.

13. Utilisation d'une masse de revêtement à deux composants selon l'une quelconque des revendications 1 à 11 dans des laques et des agents d'enduction.

14. Utilisation d'une masse de revêtement à deux composants selon l'une quelconque des revendications 1 à 11 pour le revêtement de substrats.

15. Utilisation d'une masse de revêtement à deux composants selon l'une quelconque des revendications 1 à 11 pour le revêtement de parties de bâtiments, pour les revêtements sur les (grands) véhicules et les avions et les utilisations industrielles, les voies ferrées, les véhicules utilitaires dans le domaine agricole et de la construction, ce qu'on appelle ACE (agricultural, construction and earthmoving equipment), les installations éoliennes, les ponts, les bâtiments, les pylônes électriques, les citernes, les conteneurs, les pipelines, les centrales électriques, les installations chimiques, les bateaux, les grues, les halls, les toitures, les meubles, les fenêtres, les portes, le parquet, le carton, pour les revêtements de sol, comme pour les parkings ou dans les hôpitaux, et en particulier dans les laques automobiles comme application pour les retouches ; les applications pour les retouches, les matériaux synthétiques et industrielles, par exemple les ACE, étant préférées.
